(19) Europäisches Patentamt / European Patent Office / Office européen des brevets

(11) **EP 4 386 456 B1**

(12) **EUROPEAN PATENT SPECIFICATION**

(45) Date of publication and mention
of the grant of the patent:
**04.03.2026   Bulletin 2026/10**

(21) Application number: **22214181.4**

(22) Date of filing: **16.12.2022**

(51) International Patent Classification (IPC):
***G02B 6/125*** *(2006.01)*

(52) Cooperative Patent Classification (CPC):
**G02B 6/125**

(54) **A LOW-LOSS OPTICAL BENT WAVEGUIDE CORE**

VERLUSTARMER OPTISCHER GEBOGENER WELLENLEITERKERN

COEUR DE GUIDE D'ONDES OPTIQUE COURBÉ À FAIBLES PERTES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**19.06.2024   Bulletin 2024/25**

(73) Proprietor: **Imec VZW
3001 Leuven (BE)**

(72) Inventor: **Deng, Qingzhong
3050 Oud-Heverlee (BE)**

(74) Representative: **Roth, Sebastian
Mitscherlich PartmbB
Karlstraße 7
80333 München (DE)**

(56) References cited:
US-A- 5 524 165          US-A1- 2004 208 465
US-A1- 2021 294 032

**Description**

TECHNICAL FIELD

The present disclosure relates to waveguides. The disclosure proposes a waveguide core. The waveguide core is bent according to a smooth curve or a family of smooth curves.

BACKGROUND

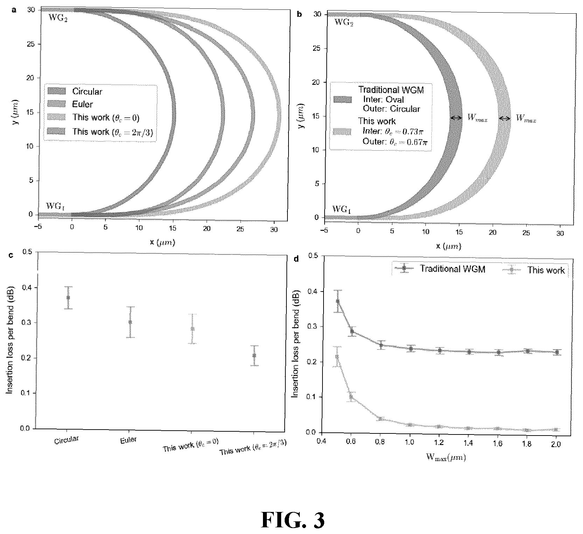

When light propagates in a bent waveguide core, the center of the optical modes of the light may be shifted towards a waveguide core's outer boundary due to the bending. Generally, the smaller the bending curvature of the waveguide core is, the larger the shift of the optical mode center is. The shift may result in mode transition loss when connecting two waveguide cores with different curvatures. Or, for example, if a waveguide core comprises a connection between a straight waveguide core segment and a bent waveguide core segment, i.e., comprises a straight-bent waveguide core transition. To reduce the mode transition loss, conventional bent waveguide cores may be bent according to an Euler curve (see FIG. 3), but better solutions are still needed.

US 2004/208465 A1 discloses a planar optical waveguide structure comprising curved waveguides formed within a substrate, wherein trenches filled with a low-index material are disposed proximate to the curved portions of the waveguide to enhance optical confinement. The structure provides a transition region in which the distance between the trenches and the waveguide varies gradually to support a near-adiabatic optical mode transition.

US 5524165 A discloses a method for optimizing a path length of an optical guide and optical guide obtained by said method.

US 2021/294032 A1 discloses a silicon nitride phased array chip based on a suspended waveguide structure.

SUMMARY

In view of the above, an objective of this disclosure is to reduce loss in a waveguide core that includes at least one bent waveguide core segment. In particular, an objective is to reduce a loss caused by connections of different segments of the waveguide core, for example, segments of different curvature. Another objective is to improve the energy efficiency of thermo-optic phase shifters applied to such waveguide cores.

These and other objectives are achieved by a waveguide core according to independent claim 1.

Advantageous implementations are further described in the dependent claims.

A first aspect of this disclosure provides a waveguide core having a smooth curve as an edge and/or centerline of the waveguide core, wherein a curvature of the smooth curve is continuous and the first order derivative of the curvature of the smooth curve with respect to an arc length of the smooth curve, for example, an entire arc length of the smooth curve, is continuous; wherein the smooth curve comprises a curve start point and a curve end point; wherein the derivative of the curvature of the smooth curve is zero at the curve start point and at the curve end point; wherein the curvature of the smooth curve is zero at the curve start point, and is non-zero or zero at the curve end point.

The bent waveguide core of the first aspect allows reducing loss in the waveguide core, in particular, if the waveguide core has segments of different curvature and/or has also straight segments. For example, the waveguide core may be configured to minimize the mode transition loss.

The curvature of the smooth curve may be not always zero.

The curvature $\kappa$ of the smooth curve may be defined by the transition of the tangential angle $\theta$ of the smooth curve, for example, along the arc length of the smooth curve, for example, along the entire arc length of the smooth curve. The curvature of the smooth curve may have a continuous transition of the tangential angle.

The tangential angle difference between the curve start point and the curve end point may be less than $\pi$.

The waveguide core may further have one or more other smooth curves as one or more other edges of the waveguide core.

The waveguide core may further have one or more other smooth curves as one or more baseline curves. Each baseline curve may be parallel to an edge of the waveguide core and/or to a smooth curve associated with said edge, for example, along an arc length of a curve segment of the smooth curve or along an entire arc length of the smooth curve.

The smooth curve comprises a curve segment, wherein the curve segment comprises a start point of the curve segment and an end point of the curve segment; wherein the derivative of the curvature of the smooth curve is zero at the start point of the curve segment and is zero at the end point of the curve segment; and wherein the curvature of the smooth curve is zero at the start point of the curve segment and is non-zero at the end point of the curve segment.

Thus, for example, the loss in the waveguide core at one or more connection points between one or more segments comprised in the smooth curve and/or between other waveguide cores connectable to the waveguide core may be reduced. This may be achieved, because the first order derivative of the curvature of the smooth curve with respect to the arc length of the smooth curve is continuous.

The curvature of the smooth curve in the curve segment may be according to and/or may be defined by a third order, or larger order, polynomial function.

The end point of the curve segment may be the curve end point. Alternatively, the start point of the curve segment may be the curve start point. Alternatively, the end point of the curve segment may not be the curve end point, and the start point of the curve segment may not be the curve start point.

**In** a further implementation form of the first aspect, a Cartesian coordinate system is defined with the start point of the curve segment as its origin; wherein the x-axis and y-axis are defined to have the end point of the curve segment in the first quadrant, and a tangential angle of zero radian at the start point of the curve segment; wherein the tangential angle, for example in the unit of radian, of any point P on the curve segment is

$$\theta(s) = \frac{4\kappa_e^3 \theta_e s^3 - \kappa_e^4 s^4}{16\theta_e^3};$$

wherein s is the length of the arc length of the smooth curve from the start point of the curve segment to a point $P$; wherein $\kappa_e$ is the curvature at the end point of the curve segment, and $\theta_e$ is the tangential angle at the end point of the curve segment.

**In** a further implementation form of the first aspect, the curve segment of the smooth curve is parallel to a baseline curve; wherein the baseline curve comprises a start point of the baseline curve and an end point of the baseline curve; wherein a Cartesian coordinate system is defined with the start point of the baseline curve as its origin; wherein the x-axis and y-axis are defined to have the end point of the baseline curve in the first quadrant, and a tangential angle of zero radian at the start point of the baseline curve; wherein the tangential angle, for example in the unit of radian, of any point P on the baseline curve is

$$\theta(s) = \frac{4\kappa_e^3 \theta_e s^3 - \kappa_e^4 s^4}{16\theta_e^3};$$

wherein s is the length of the arc length of the smooth curve from the start point of the baseline curve to a point $P$; wherein $\kappa_e$ is the curvature at the end point of the baseline curve, and $\theta_e$ is the tangential angle at the end point of the baseline curve.

In a further implementation form of the first aspect, the smooth curve further comprises a straight segment, wherein the straight segment comprises a start point of the straight segment and an end point of the straight segment; wherein the end point of the straight segment is connected to the start point of the curve segment.

The start point of the straight segment may be the curve start point.

The smooth curve further comprises a circular segment, wherein a curvature of the circular segment is constant; wherein the curvature of the circular segment is equal to the curvature of the smooth curve at the end point of the curve segment; wherein the circular segment comprises a start point of the circular segment and an end point of the circular segment; and wherein the end point of the curve segment is connected to the start point of the circular segment.

The end point of the circular segment may be or may not be the curve end point.

In a further implementation form of the first aspect, the curve segment is a first curve segment and wherein the smooth curve further comprises a second curve segment according to the first curve segment, wherein the curvature at the end point of the first curve segment is the same as the curvature at the end point of the second curve segment; and wherein the end point of the first curve segment is connected to the end point of the second curve segment, or wherein the end point of the circular segment is connected to the end point of the second curve segment.

The curvature of the smooth curve in the second curve segment may be according to and/or defined by a third order or larger order polynomial function. Said function may or may not be the same function that may define the curvature of the smooth curve in the first curve segment.

The second curve segment may be mirrored to the first curve segment.

The second curve segment may be line symmetric to the first curve segment regarding a perpendicular bisector of the smooth curve along its arc length between the second curve segment and the first curve segment.

The end point of the second curve segment may be or may not be the curve end point.

The straight segment may be a first straight segment.

The smooth curve may further comprise a second straight segment. The second straight segment may comprise a start point of the second straight segment and an end point of the second straight segment, wherein the start point of the second straight segment may be connected to the end point of the second curve segment. The end point of the second straight segment may be the curve end point.

In a further implementation form of the first aspect, the waveguide core has a first smooth curve as an inner edge and/or centerline of the waveguide core, and has a second smooth curve as an outer edge of the waveguide core.

The first smooth curve may be a smooth curve according to the first aspect or the implementation forms of the first aspect. The second smooth curve may be a smooth curve according to the first aspect or the implementation forms of the first aspect.

A curvature of the waveguide core may define an inner edge of the waveguide core, and the curvature of the waveguide core may also define an outer edge of the waveguide core. For example, the inner edge of the waveguide core may be shorter due to a curvature of the waveguide core, and the outer edge of the waveguide core may be longer due the curvature of the waveguide core. The curvature of the waveguide core may refer to how the waveguide core is bent.

For example, the inner edge may be an edge that follows a shortest path, along the longitudinal extension of the waveguide core, from a start cross section of the waveguide core to an end cross section of the waveguide core. The outer edge may be an edge that follows a longest path, along the longitudinal extension of the waveguide core, from the start cross section of the waveguide core to the end cross section of the waveguide core.

The waveguide core may further have one or more other smooth curves as one or more other edges of the waveguide core.

For example, the waveguide core may be a core of a slot waveguide or a core of a rib waveguide. The first edge, the second edge, and the one or more other edges may be defined along the longitudinal extension of the waveguide core and/or may define the waveguide core.

In general, all edges of the waveguide core may refer to edges along the longitudinal extension of the waveguide core.

In a further implementation form of the first aspect, the first smooth curve and the second smooth curve are parallel to each other.

The first smooth curve may be parallel to the second smooth curve along the longitudinal extension of the waveguide core, for example, along the entire longitudinal extension of the waveguide core. Thus, the waveguide core may have a same width along the longitudinal extension, for example length, of the waveguide core.

The constant width along the longitudinal extension of the waveguide core may be adjusted such that the waveguide core has optimized properties, for example low loss.

In a further implementation form of the first aspect, the first smooth curve and the second smooth curve are not parallel to each other.

The first smooth curve may be nonparallel to the second smooth curve along the longitudinal extension of the waveguide core. Thus, the waveguide core may have a varying width along the longitudinal extension, for example length, of the waveguide core.

The varying width along the longitudinal extension of the waveguide core may be adjusted such that the waveguide core has optimized properties, for example low loss and/or excites a whispering gallery mode (WGM).

In a further implementation form of the first aspect, the waveguide core is configured to be thermally connectable to a thermo-optic phase shifter in at least a portion of the inner boundary of the waveguide core.

Alternatively or additionally, the waveguide core is configured to be electrically connectable to a thermo-optic phase shifter in at least the portion of the inner boundary of the waveguide core.

The term "thermally connectable" may refer to being directly thermally connected or connectable. Two components being "thermally connectable" may include that said components may be in direct physically contact and/or attached to each other. For example, said components may be directly adjacent to each other. The term "thermally connectable" may not include only being connected by gas molecules and/or radiation. The term "thermally connectable" may refer to two solid components that may be in direct physical contact with each other, wherein said contact allows for direct heat transfer. For example, electrical wires can be connected to deliver current through for heating generation. The electrical wires can be metal, such as Cu, and Al etc., or doped semiconductor, such as Si, and Ge etc.

The portion of the inner boundary of the waveguide core may be in, and/or may be associated with, and/or may correspond to, a portion of the circular segment of the smooth curve.

Additionally or alternatively, the portion of the inner boundary of the waveguide core may be in, associated with, and/or correspond to a portion of the first curve segment and/or the second curve segment of the smooth curve, for example, if the smooth curve does not comprise a circular section or if the circular section is too small for thermally connecting the thermo-optic phase shifter to the waveguide core.

The thermo-optic phase shifter may comprise a heater, wherein the heater may be thermally connectable to the waveguide core in at least the portion of the inner boundary of the waveguide core.

In a further implementation form of the first aspect, a sidewall of the waveguide core facing towards the thermo-optic phase shifter in the at least portion of the inner boundary is configured to be open for the thermo-optic phase shifter.

For example, a side wall of the waveguide core may be open and/or removed in a portion of the waveguide core.

Thus, the thermo-optic phase shifter may be applied more efficiently to the waveguide core.

The at least portion of the inner boundary may be configured to be open for the thermo-optic phase shifter, as the waveguide core is configured to excite a WGM. Thus, the waveguide core can be partially opened without increasing the loss of the waveguide core.

In a further implementation form of the first aspect, a centerline of the waveguide core along the longitudinal extension of the waveguide core, for example, along an entire longitudinal extension of the waveguide core, defines a plane, and wherein the inner edge of the waveguide core and the outer edge of the waveguide core are in said plane along the longitudinal extension of the waveguide core.

In a further implementation form of the first aspect, the waveguide core is configured to excite a whispering gallery mode.

Thus, the energy efficiency of the thermo-optic phase shifter applied to the waveguide core can be increased.

The waveguide core may be configured to primarily excite a WGM and secondly minimize the loss of the waveguide core.

The waveguide core may have a minimized loss, for example, transition loss, based on configuring the edges and/or centerline of the waveguide core and/or the smooth curves associated with said edges and/or centerline.

Further, in this disclosure the phrases "after" and "before" when referring to the smooth curve may correspond to a direction from the curve start point to the curve end point. Thus, the curve start point is positioned before the curve end point and the curve end point is positioned after the curve start point.

Further, in this disclosure a top view may refer to a top view or a bottom view of a plane comprising the longitudinal extension direction of the waveguide core. The plane may be defined by and/or comprise the inner edge and the outer edge of the waveguide core. The top view and the bottom view of the plane may be mirrored.

## BRIEF DESCRIPTION OF DRAWINGS

The above described aspects and implementation forms will be explained in the following description of specific embodiments in relation to the enclosed drawings, in which

FIG. 1 shows an exemplary waveguide core according to an embodiment of this disclosure.

FIG. 2a shows a smooth curve according to an embodiment of this disclosure and a curve with a conventional circular bend.

FIG. 2b shows respective smooth curves for different $\theta_c$ values for waveguide cores according to an embodiment of this disclosure.

FIG. 2c shows a waveguide core having constant width according to an embodiment of this disclosure.

FIG. 2d shows a waveguide core according to an embodiment of this disclosure having a varying width along its longitudinal extension.

FIG. 3a shows two waveguide cores with constant width according to an embodiment of this disclosure and two conventional waveguide cores with constant width.

FIG. 3b shows a conventional waveguide core with varying width and a waveguide core with varying width according to an embodiment of this disclosure.

FIG. 3c shows a respective measured insertion loss for exemplary waveguide cores with constant width according to an embodiment of this disclosure.

FIG. 3d shows a respective measured insertion loss for exemplary waveguide cores with varying width according to an embodiment of this disclosure.

FIG. 4 shows a top-view of a thermo-optic phase shifter for regulating a temperature of a waveguide core that is configured to excite a WGM according to an embodiment of this disclosure.

FIG. 5 shows an energy efficiency comparison of a conventional Tungsten (W) heater and a WGM-based heater according to an embodiment of the disclosure.

## DETAILED DESCRIPTION OF EMBODIMENTS

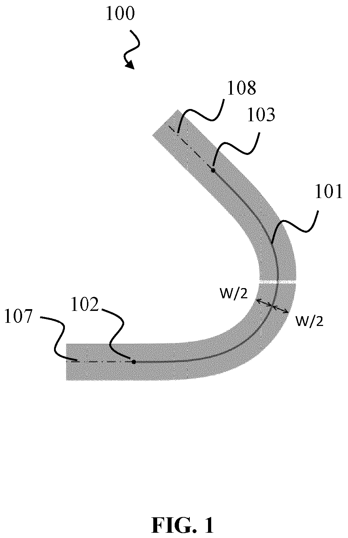

FIG. 1 shows an exemplary waveguide core 100 according to an embodiment of this disclosure. The waveguide core 100 has a smooth curve 101 as an edge and/or centerline of the waveguide core 100 (here an exemplary smooth curve 101 is illustrated). For example, the waveguide core 100 may have a respective smooth curve 101 as its one or more edges and/or a centerline. The respective edge and/or centerline of the waveguide core 100 may be associated with, may correspond to, and/or may define said smooth curve 101. The smooth curve comprises a curve start point 102 and a curve end point 103.

In general, a curvature of the smooth curve 101 is continuous, and the first order derivative of the curvature of the smooth curve 101 with respect to an arc length of the smooth curve 101 is continuous. The derivative of the curvature of the smooth curve 101 is zero at the curve start point 102 and at the curve end point 103. The curvature of the smooth curve 101 is zero at the curve start point 102, and is non-zero or zero at the curve end point 103.

The exemplary waveguide core 100 shown in FIG. 1 has a smooth curve 101 as a centerline. For example, the distance from the centerline of the waveguide core 100 to respectively an inner edge and an outer edge of the waveguide core 100 may be W/2 (as indicated in FIG. 1), wherein W may be a width of the waveguide core 100. In this example, the inner and outer edges and the centerline smooth curve 101 have the same curvature, because the waveguide core width is constant along the longitudinal extension of the waveguide core 100.

Further, FIG. 1 shows that the waveguide core 100 may also have two straight segments 107, 108, which are indicated as dot-dashed lines. One straight segment 107 may be positioned before the curve start point 102, and the other straight segment 108 may be positioned after the curve end point 103. In this example, the two straight segments 107, 108 are not part of the smooth curve 101. Alternatively, however, the exemplary straight segments 107, 108 shown in FIG. 1 could be comprised in the smooth curve 101. In this case, the curve start point 102 and the curve end point 103 would be at a different position than shown on FIG. 1. The curve start point 102 would be at a start point of one of the straight segments 107, and the curve end point 103 would be at an end point the other straight segment 108.

The waveguide core 100 may be connectable to and/or comprised in a waveguide. The waveguide core 100 may be connectable to, comprised in, surrounded by, and/or covered by a cladding. A waveguide may comprise the waveguide core 100 and a cladding surrounding the waveguide core 100.

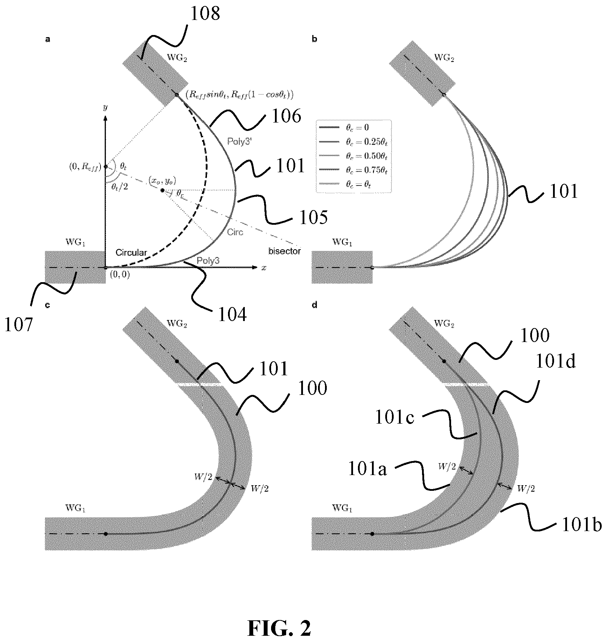

FIGs. 2a to 2d show exemplary smooth curves 101 for waveguide cores 100 according to embodiments of this disclosure. Any waveguide core 100 according to this disclosure may be used to replace a conventional circular bend for connecting arbitrarily two straight waveguides (WG$_1$ and WG$_2$).

FIG. 2a shows a smooth curve 101 for a waveguide core 100 according to an embodiment of this disclosure, and a conventional curve with a circular bend. The conventional curve is shown with a dashed line.

FIG. 2b shows respective smooth curves 101 for different $\theta_c$ values for waveguide cores 100 according to an embodiment of this disclosure. Each smooth curve 101 shown in FIG. 2b may be defined by a $\theta_c$ value. By adjusting the $\theta_c$ value, the smooth curve 101 and accordingly the waveguide core 100 may be adjusted.

FIG. 2c shows a waveguide core 100 having constant width according to an embodiment of this disclosure. This waveguide core 100 may have a smooth curve 100 as a centerline of the waveguide core 100. The width of the waveguide core 100 may be W (as indicated in FIG. 2c). The waveguide core 100 may be surrounded by a cladding (not shown).

FIG. 2d shows a waveguide core 100 according to an embodiment of this disclosure having a varying width along its longitudinal extension. The waveguide core 100 shown in FIG. 2d has a first smooth curve 101a and a second smooth curve 101b. The two smooth curves 101a and 101b respectively follow the inner edge and the outer edge of the waveguide core 100. Further, FIG. 2d shows a third smooth curve 101c and a fourth smooth curve 101d which are inside the waveguide core 100. The third smooth curve 101c may be a first baseline curve, and the fourth smooth curve 101d may be a second baseline curve. In particular, the third smooth curve 101c may correspond to the curvature of the inner edge of the waveguide core 100 and/or the first smooth curve 101a, and the fourth smooth curve 101d may correspond to the curvature of the outer edge of the waveguide core 100 and/or the second smooth curve. The inner edge and the outer edge may be defined with regards to the direction in which the waveguide core 100 is bent. Again, the waveguide core 100 may be surrounded by a cladding (not shown). The cladding may have the same thickness along the length of the waveguide core 100, for example, along the entire length of the waveguide core 100.

The third smooth curve 101c may run parallel to the inner edge of the waveguide core 100, for example, along the arc length of the first curve segment 104, and the fourth smooth curve 101b may run parallel to the outer edge of the waveguide core 100, for example, along the arc length of the first curve segment 104. For example, the third smooth curve 101c and the fourth smooth curve 101d may be offset respectively from the inner edge and the outer edge, for instance, with a distance of 3W/4 and W/4, or any other number or pair of numbers.

In an example, the smooth curve 101 of any waveguide core 100 of this disclosure may comprise, along the arc length of the smooth curve 101, the following in sequence: a first straight segment 107, a first curve segment 104, a circular segment 105, a second curve segment 106, and a second straight segment 108.

In another example, the smooth curve 101 of any waveguide core 100 of this disclosure may comprise, along the arc length of the smooth curve 101, in sequence a first straight segment 107, a first curve segment 104, a second curve segment 106, and a second straight segment 108. Thus, the smooth curve 101 may have zero curvature at the curve start point and the curve end point and the derivative of the curvature of the smooth curve 101 may in said points may be zero.

In another example, the smooth curve 101 of any waveguide core 100 of this disclosure may comprise, along the arc length of the smooth curve 101, in sequence a first straight segment 107 and a first curve segment 104. Thus, the smooth curve 101 may have zero curvature at the curve start point and non-zero curvature at the curve end point, and the derivative of the curvature of the smooth curve 101 in said points may be zero.

For the following part of the description, a coordinate system is defined based on $WG_1$. FIG. 2a, shows the center of the $WG_1$ end is the origin of the coordinate system, and the direction of $WG_1$ is the x-axis direction. $(x_1, y_1) = (0, 0)$ and $(x_2, y_2) = (R_{eff} \sin \theta_t, R_{eff}(1 - \cos \theta_t))$ are the two given points that can be connected by a smooth curve 101. Further, for the following part of the description, only $y_2 > 0$ is considered. Alternatively, for the case of $y_2 < 0$, the bend design can be done by first connecting to $(x_2, -y_2)$ with the procedure described below, and then mirroring the generated bend with respect to x-axis to connect to $(x_2, y_2)$.

Each smooth curve 101 may comprise a bend. The bend may define an entire curvature and/or an entire curved section of the smooth curve 101. For example, all curved parts of the smooth curve may be comprised and/or defined by the bend of the smooth curve. The smooth curve may further comprise or not comprise one or more straight segments 107, 108.

In general, the bend of each smooth curve 101 shown in FIG. 2 may comprise three segments, labelled as Poly3 104, Circ 105, and Poly3' 106. Circ 105 is a circular segment 105 with the curvature angle of $\theta_c$, wherein $\theta_c$ may be limited by $0 \le \theta_c \le \theta_t$. When $\theta_c = 0$, the bend consists of Poly3 104 and Poly3' 106 segments only and no circular segment 105. When $\theta_c = \theta_t$, the bend is the normal circular bend with a radius $R_{eff}$.

The curvature of the smooth curve 101 may be the first order derivative of the tangential angle along the arc length of the smooth curve.

The steps to generate a smooth curve 101 and/or a waveguide core 100, for example, a low loss bend waveguide core 100, may comprise:

Step-1: select the $3^{rd}$ polynomial function as a base curvature function for Poly3:

$$\kappa(s) = a_0 + a_1 s + a_2 s^2 + a_3 s^3 \qquad (1)$$

Where $\kappa = d\theta/ds$ is the curvature, s is the curve length, and $\theta$ is a tangential angle along the smooth curve 101. $\theta$ can be expressed as:

$$\theta(s) = \theta_0 + \int_0^s \kappa(s)ds = \theta_0 + a_0 s + \frac{1}{2}a_1 s^2 + \frac{1}{3}a_2 s^3 + \frac{1}{4}a_3 s^4 \qquad (2)$$

Step-2: Set the boundary conditions for the Poly3 segment 104:
$\theta$ is continuous. Similarly, a conventional circular bend would be continuous. Additionally, the $\kappa$ transits gradually (i.e. $\kappa$ is continuous) and smoothly (i.e. $\kappa' = d\kappa/ds$ is continuous) at both connection points to the straight waveguides $WG_1$ and $WG_2$.

$$\begin{cases} \theta|_{s=0} = 0 \\ \kappa|_{s=0} = 0 \\ \kappa'|_{s=0} = 0 \\ \theta|_{s=L} = \frac{\theta_t - \theta_c}{2} \\ \kappa'|_{s=L} = 0 \end{cases} \qquad (3)$$

where L is the total length of the Poly3 segment 104, which is determined in Step-3. The continuity of $\kappa$ at $s = L$ is not included in this equation, which will be applied in Step-5.
Taking Eq. (3) as the boundary conditions for Eq. (1) and Eq. (2), the curvature $\kappa$ and the tangential angle $\theta$ can be expressed as:

$$\begin{cases} \kappa(s, L) = \frac{\theta_t - \theta_c}{L^4}(3Ls^2 - 2s^3) \\ \theta(s, L) = \frac{\theta_t - \theta_c}{L^4}\left(Ls^3 - \frac{1}{2}s^4\right) \end{cases} \qquad (4)$$

The tangential angle $\theta$ expression can be re-written as $\theta(s) = \frac{4\kappa_e^3 \theta_e s^3 - \kappa_e^4 s^4}{16\theta_e^3}$ when it is expressed with the curvature at the end point $\kappa_e = \frac{\theta_t - \theta_c}{L}$, and the tangential angle at the end point $\theta_e = \frac{\theta_t - \theta_c}{2}$.

Step-3: Calculate L:
The osculating circle center $(x_o, y_o)$ at the end point of the Poly3 segment 104 can be expressed as the function of total length L of the Poly3 segment 104.

$$\begin{cases} x_o(L) = \int_0^L \cos\theta(s,L)\,ds - \frac{L}{\theta_t - \theta_c}\sin\frac{\theta_t - \theta_c}{2} \\ y_o(L) = \int_0^L \sin\theta(s,L)\,ds + \frac{L}{\theta_t - \theta_c}\cos\frac{\theta_t - \theta_c}{2} \end{cases} \tag{5}$$

To connect the Poly3 segment 104 to the middle circular segment 105 Circ, $(x_o, y_o)$ should be on the bisector of the bend angle $\theta_t$ i.e. $L$ is the solution of the following equation:

$$x_o(L)\cdot\cos\frac{\theta_t}{2} + \left(y_o(L) - R_{eff}\right)\cdot\sin\frac{\theta_t}{2} = 0 \tag{6}$$

Step-4: Generate the coordinates on the Poly3 segment 104:
The coordinates on the Poly3 segment $(x, y)$ can be generated by Eq. (7) where $0 \le l \le L$.

$$\begin{cases} x(l) = \int_0^l \cos\theta(s,L)\,ds \\ y(l) = \int_0^l \sin\theta(s,L)\,ds \end{cases} \tag{7}$$

Step-5: Generate the coordinates on the Circ segment 105:

The curvature of the Circ segment 105 may be chosen to be $\frac{\theta_t - \theta_c}{L}$ so that the curvature is continuous at the connection point of the Poly3 segment 104 and the Circ segment 105. The Circ segment 105 may be circular with the radius of $R = \frac{L}{\theta_t - \theta_c}$, the center of $(x_o, y_o)$, the starting point of $(x(L), y(L))$, and the angle of $\theta_c$.

Step-6: Generate the coordinates on the Poly3' segment 106:
The low-loss bend may be symmetric with respect to the bisector of the bend angle $\theta_t$. The Poly3' segment 106 may be generated by mirroring the Poly3 segment 104 with respect to the bisector of the bend angle $\theta_t$.

Step-7: Generate the waveguide core 100:
Given the value of $\theta_c$, the smooth curve 101 connecting (0, 0) and $(R_{eff}\sin\theta_t, R_{eff}(1\text{-cos }\theta_t))$ can be generated with Step-1 to Step-6. The generated smooth curve 101 may be controlled and/or adjusted by $\theta_c$ $(0 \le \theta_c \le \theta_t)$. The smaller the $\theta_c$ is, the more the middle of the curve is shifted to the inner side of the bending (see FIG. 2b).

Step-1 to Step-6 may be used to generate the coordinates of a waveguide baseline curve 101c, 101d. The inner and/or outer edge of the waveguide core 100 may be generated as a parallel curve to the baseline curve 101c, 101d.
To generate a bent waveguide core with constant width of $W$, the inner and outer waveguide core edges or boundaries may be generated as a parallel curve with a distance of $\frac{W}{2}$ to the waveguide core baseline curves 101c, 101d towards the inner and outer direction respectively (see FIG. 2c).
To generate a bent waveguide core 100 with varying width, two waveguide baseline curves 101c, 101d may be generated with different $\theta_c$ values which are used to generate the inner and outer edges respectively. For example, the inner and outer waveguide core edges or boundaries may be generated as a parallel curve with a distance of $\frac{W}{2}$ to the waveguide core baseline curves 101c, 101d towards the inner and outer direction respectively (see FIG. 2d).
A low-loss bent waveguide core 100 may improve conventional integrated photonic systems. Embodiments of this disclosure provide a low-loss bent waveguide core 100, wherein the bending curvature changes gradually and smoothly. A waveguide core 100 bend, for example a poly3-circular bend, may be constructed with one adjustable parameter $\theta_c$ which can be used to lower the loss, for example, when a waveguide sidewall roughness exists.

A curvature of a waveguide core 100 may transit gradually such that the transition loss is lowered. A waveguide core 100 according to an embodiment of this disclosure may have a waveguide core curvature $\kappa$ transit not only gradually (i.e. $\kappa$ is continuous) but also smoothly (i.e. $\kappa'$ is continuous). Conventional designs do not have a continuous $\kappa'$ during a straight-bent waveguide transition. The continuous $\kappa'$ may result in lower transition loss as shown in FIG. 3a and 3c.

The coordinates of a straight-bent transition curve 101 may be determined by the base curvature function and the boundary conditions.

i) The boundary conditions of the waveguide core 100 may be configured such that the curvature derivative $\kappa'$ is continuous at straight-bent waveguide core connection points.

ii) The waveguide core 100 may comprise an optional circular segment 105 at the middle of bent waveguide which can reduce the bending loss (see FIG. 2a and 2c).

iii) The waveguide core 100 may be configured to excite a WGM by giving the bend inner and outer edges different circular segment 105 angle $\theta_c$ (see FIG. 2b and 2d).

Combining the transition curve design with waveguide core 100 widening during the transition can further reduce the loss.

The waveguide core 100 may have only one adjustable parameter. Thus, said waveguide core 100 may be easy to use in practical applications.

The waveguide core 100 may have lower loss than conventional waveguide cores 100, as the curve associated with the waveguide core 100 is smoother.

A waveguide core 100 according to this disclosure may be associated with a bend with arbitrary angle $\theta_c$ and/or the loss may be lower because the mode transition loss may be reduced.

FIGs. 3a to 3d shows multiple exemplary waveguide cores 100.

FIG. 3a shows two waveguide cores 100 with constant width according to an embodiment of this disclosure and two conventional waveguide cores with constant width.

FIG. 3b shows a conventional waveguide core with varying width and a waveguide core 100 with varying width according to an embodiment of this disclosure.

FIG. 3c shows a respective measured insertion loss for exemplary waveguide cores 100 with constant width according to an embodiment of this disclosure.

FIG. 3d shows a respective measured insertion loss for exemplary waveguide cores 100 with varying width according to an embodiment of this disclosure.

A varying width of the waveguide core 100 $W_{max}$ may be achieved by varying the parameter $\theta_c$ for the inner edge or boundary while fixing the parameter $\theta_c$ for the outer edge or boundary. Alternatively, the $\theta_c$ for the inner boundary and the $\theta_c$ for the outer boundary may be varied. The waveguide may be fabricated on a SiN with Silicon oxide as the bottom and upper cladding. The thickness of SiN may be 150 nm, the width in $WG_1$ and $WG_2$ may be 0.5 $\mu$m, and the light wavelength may be 638 nm.

Conventionally, waveguide cores 100 associated with oval-circular curves may be used to widen the waveguide to excite a WGM. For example, a circular curve as the outer boundary of the bend, and an oval curve as the inner boundary of the bend may be used. However, the usage of such conventionally waveguide cores 100 is limited to a maximal 180° bend, and have a straight-bent transition loss.

The waveguide core 100 and/or the bend of the waveguide core 100 may excite a WGM adiabatically, for example, by giving the inner and outer boundary of the waveguide core 100 different $\theta_c$ values. If a WGM is excited in the waveguide core 100, a heater, for example, a doped silicon heater, can be embedded into the bend of the waveguide core 100 which can significantly improve the energy efficiency of a thermo-optic phase shifter comprising the heater. For conventional thermo-optic phase shifters, the heater may be placed on top of the waveguide.

Doped Si may be used as a heater to improve the energy efficiency. This may be more efficient because Si has, for example, more than 100x higher thermal conductivity than $SiO_2$. When the heating is generated in the waveguide, most of the heating may propagate along the longitudinal extension of the waveguide core. A waveguide core 100 according to an embodiment of this disclosure may enable and/or be connectable to a whispering gallery mode-based (WGM-based) doped Si heater.

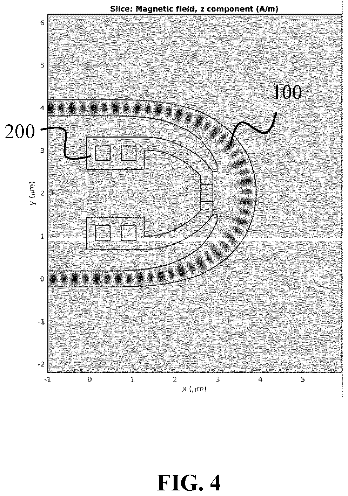

FIG. 4 shows a top-view of a thermo-optic phase shifter 200 for regulating a temperature of a waveguide core 100 that is configured to excite a WGM according to an embodiment of this disclosure.

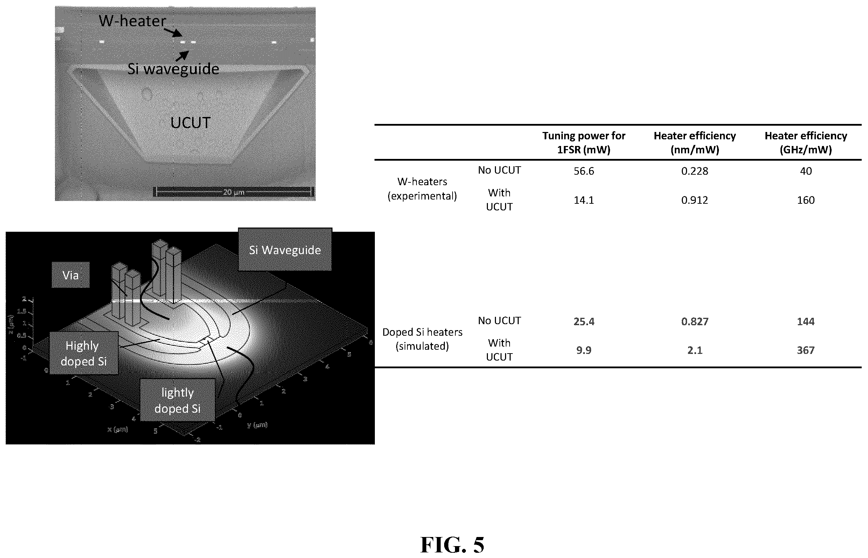

FIG. 5 shows an energy efficiency comparison of a conventional Tungsten (W) heater and a WGM-based heater according to an embodiment of the disclosure.

The WGM-based heater may be a thermo-optic phase shifter 200 or may be comprised in a thermo-optic phase shifter 200.

The disclosure has been described in conjunction with various embodiments as examples as well as implementations. However, other variations can be understood and effected by those persons skilled in the art .

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. A waveguide core (100) having a smooth curve (101) as an edge and/or centerline of the waveguide core (100),

   wherein a curvature of the smooth curve (101) is continuous and the first order derivative of the curvature of the smooth curve (101) with respect to an arc length of the smooth curve (101) is continuous;
   wherein the smooth curve (101) comprises a curve start point (102) and a curve end point (103);
   wherein the derivative of the curvature of the smooth curve (101) is zero at the curve start point (102) and at the curve end point (103);
   wherein the curvature of the smooth curve (101) is zero at the curve start point (102), and is non-zero or zero at the curve end point (103);
   wherein the smooth curve (101) comprises a curve segment (104) and a circular segment (105);
   wherein the curve segment (104) comprises a start point of the curve segment (104) and an end point of the curve segment (104);
   wherein the derivative of the curvature of the smooth curve (101) is zero at the start point of the curve segment (104) and is zero at the end point of the curve segment (104);
   wherein the curvature of the smooth curve (101) is zero at the start point of the curve segment (104) and is non-zero at the end point of the curve segment (104);
   wherein a curvature of the circular segment (105) is constant;
   wherein the curvature of the circular segment (105) is equal to the curvature of the smooth curve (101) at the end point of the curve segment (104);
   wherein the circular segment (105) comprises a start point of the circular segment (105) and an end point of the circular segment (105); and
   wherein the end point of the curve segment (104) is connected to the start point of the circular segment (105).

2. The waveguide core (100) according to claim 1,

   wherein a Cartesian coordinate system is defined with the start point of the curve segment (104) as its origin;
   wherein the x-axis and y-axis are defined to have the end point of the curve segment (104) in the first quadrant, and a tangential angle of zero radian at the start point of the curve segment (104);
   wherein the tangential angle of any point P on the curve segment (104) is

   $$\theta(s) = \frac{4\kappa_e^3 \theta_e s^3 - \kappa_e^4 s^4}{16\theta_e^3};$$

   wherein s is the length of the arc length of the smooth curve (101) from the start point of the curve segment (104) to a point P;
   wherein $\kappa_e$ is the curvature at the end point of the curve segment (104), and $\theta_e$ is the tangential angle at the end point of the curve segment (104).

3. The waveguide core (100) according to claim 1, wherein the curve segment (104) of the smooth curve (101) is parallel to a baseline curve;

   wherein the baseline curve comprises a start point of the baseline curve and an end point of the baseline curve;
   wherein a Cartesian coordinate system is defined with the start point of the baseline curve as its origin;
   wherein the x-axis and y-axis are defined to have the end point of the baseline curve in the first quadrant, and a tangential angle of zero radian at the start point of the baseline curve;
   wherein the tangential angle of any point P on the baseline curve is

$$\theta(s) = \frac{4\kappa_e^3 \theta_e s^3 - \kappa_e^4 s^4}{16\theta_e^3};$$

wherein s is the length of the arc length of the smooth curve (101) from the start point of the baseline curve to a point P;

wherein $\kappa_e$ is the curvature at the end point of the baseline curve, and $\theta_e$ is the tangential angle at the end point of the baseline curve.

4. The waveguide core (100) according to one of the claims 1 to 3, wherein the smooth curve (101) further comprises a straight segment (107),

wherein the straight segment (107) comprises a start point of the straight segment (107) and an end point of the straight segment (107);

wherein the end point of the straight segment (107) is connected to the start point of the curve segment (104).

5. The waveguide core (100) according to one of the claims 1 to 4, wherein the curve segment (104) is a first curve segment (104) and wherein the smooth curve (101) further comprises a second curve segment (106) according to the first curve segment (104),

wherein the curvature at the end point of the first curve segment (104) is the same as the curvature at the end point of the second curve segment (104); and

wherein the end point of the first curve segment (104) is connected to the end point of the second curve segment (104), or wherein the end point of the circular segment (105) is connected to the end point of the second curve segment (104).

6. The waveguide core (100) according to any of the preceding claims, the waveguide core (100) having a first smooth curve (101a) as an inner edge and/or centerline of the waveguide core (100), and having a second smooth curve (101b) as an outer edge of the waveguide core (100).

7. The waveguide core (100) according to claim 6, wherein the first smooth curve (101a) and the second smooth curve (101b) are parallel to each other.

8. The waveguide core (100) according to claim 6,
wherein the first smooth curve (101a) and the second smooth curve (101b) are not parallel to each other.

9. The waveguide core (100) according to one of the claims 6 to 8,
wherein the waveguide core (100) is configured to be thermally connectable to a thermo-optic phase shifter (200) in at least a portion of the inner boundary of the waveguide core (100).

10. The waveguide core (100) according to claim 9,
wherein a sidewall of the waveguide core (100) facing towards the thermo-optic phase shifter (200) in the at least portion of the inner boundary is configured to be open for the thermo-optic phase shifter (200).

11. The waveguide core (100) according to one of the claims 6 to 10,

wherein a centerline of the waveguide core (100) along the longitudinal extension of the waveguide core (100) defines a plane, and

wherein the inner edge of the waveguide core (100) and the outer edge of the waveguide core (100) are in said plane along the longitudinal extension of the waveguide core (100).

12. The waveguide core (100) according to any of the preceding claims,
wherein the waveguide core (100) is configured to excite a whispering gallery mode.

**Patentansprüche**

1. Wellenleiterkern (100), der eine glatte Kurve (101) als eine Kante und/oder eine Mittellinie des Wellenleiterkerns (100) aufweist,

wobei eine Krümmung der glatten Kurve (101) kontinuierlich ist und die Ableitung erster Ordnung der Krümmung der glatten Kurve (101) in Bezug auf eine Bogenlänge der glatten Kurve (101) kontinuierlich ist;

wobei die glatte Kurve (101) einen Kurvenstartpunkt (102) und einen Kurvenendpunkt (103) umfasst;

wobei die Ableitung der Krümmung der glatten Kurve (101) am Kurvenstartpunkt (102) und am Kurvenendpunkt (103) gleich Null ist; wobei die Krümmung der glatten Kurve (101) an dem Kurvenstartpunkt (102) gleich Null ist und an dem Kurvenendpunkt (103) nicht gleich Null oder gleich Null ist;

wobei die glatte Kurve (101) ein Kurvensegment (104) und ein kreisförmiges Segment (105) umfasst;

wobei das Kurvensegment (104) einen Startpunkt des Kurvensegments (104) und einen Endpunkt des Kurvensegments (104) umfasst;

wobei die Ableitung der Krümmung der glatten Kurve (101) am Startpunkt des Kurvensegments (104) gleich Null ist und am Endpunkt des Kurvensegments (104) gleich Null ist;

wobei die Krümmung der glatten Kurve (101) am Startpunkt des Kurvensegments (104) gleich Null ist und am Endpunkt des Kurvensegments (104) nicht gleich Null ist;

wobei eine Krümmung des kreisförmigen Segments (105) konstant ist; wobei die Krümmung des kreisförmigen Segments (105) gleich der Krümmung der glatten Kurve (101) an dem Endpunkt des Kurvensegments (104) ist;

wobei das kreisförmige Segment (105) einen Startpunkt des kreisförmigen Segments (105) und einen Endpunkt des kreisförmigen Segments (105) umfasst; und

wobei der Endpunkt des Kurvensegments (104) mit dem Startpunkt des kreisförmigen Segments (105) verbunden ist.

2. Wellenleiterkern (100) nach Anspruch 1,

wobei ein kartesisches Koordinatensystem mit dem Startpunkt des Kurvensegments (104) als sein Ursprung definiert ist;

wobei die x-Achse und die y-Achse so definiert sind, dass sie den Endpunkt des Kurvensegments (104) in dem ersten Quadranten und einen Tangentialwinkel von Null Radianten an dem Startpunkt des Kurvensegments (104) aufweisen;

wobei der Tangentialwinkel eines beliebigen Punkts P auf dem Kurvensegment (104) Folgender ist:

$$\theta(s) = \frac{4\kappa_e^3 \theta_e s^3 - \kappa_e^4 s^4}{16\theta_e^3};$$

wobei s die Länge der Bogenlänge der glatten Kurve (101) von dem Startpunkt des Kurvensegments (104) zu einem Punkt P ist,

Wobei $\kappa_e$ die Krümmung am Endpunkt des Kurvensegments (104) ist und $\theta_e$ der tangentiale Winkel am Endpunkt des Kurvensegments (104) ist.

3. Wellenleiterkern (100) nach Anspruch 1, wobei das Kurvensegment (104) der glatten Kurve (101) parallel zu einer Grundlinienkurve ist;

wobei die Grundlinienkurve einen Startpunkt der Grundlinienkurve und einen Endpunkt der Grundlinienkurve umfasst;

wobei ein kartesisches Koordinatensystem mit dem Startpunkt der Grundlinienkurve als sein Ursprung definiert ist;

wobei die x-Achse und die y-Achse so definiert sind, dass sie den Endpunkt der Grundlinienkurve in dem ersten Quadranten und einen Tangentialwinkel von Null Radianten an dem Startpunkt der Grundlinienkurve aufweisen;

wobei der Tangentialwinkel eines beliebigen Punkts P auf der Grundlinienkurve Folgender ist:

$$\theta(s) = \frac{4\kappa_e^3 \theta_e s^3 - \kappa_e^4 s^4}{16\theta_e^3};$$

wobei s die Länge der Bogenlänge der glatten Kurve (101) vom Startpunkt der Grundlinienkurve zu einem Punkt P ist,

wobei $\kappa_e$ die Krümmung am Endpunkt der Grundlinienkurve ist und $\theta_e$ der tangentiale Winkel am Endpunkt der Grundlinienkurve ist.

4. Wellenleiterkern (100) nach einem der Ansprüche 1 bis 3, wobei die glatte Kurve (101) ferner ein gerades Segment (107) umfasst,

wobei das gerade Segment (107) einen Startpunkt des geraden Segments (107) und einen Endpunkt des geraden Segments (107) umfasst;
wobei der Endpunkt des geraden Segments (107) mit dem Startpunkt des Kurvensegments (104) verbunden ist.

5. Wellenleiterkern (100) nach einem der Ansprüche 1 bis 4, wobei das Kurvensegment (104) ein erstes Kurvensegment (104) ist und wobei die glatte Kurve (101) ferner ein zweites Kurvensegment (106) gemäß dem ersten Kurvensegment (104) umfasst,

wobei die Krümmung an dem Endpunkt des ersten Kurvensegments (104) die gleiche ist wie die Krümmung an dem Endpunkt des zweiten Kurvensegments (104); und
wobei der Endpunkt des ersten Kurvensegments (104) mit dem Endpunkt des zweiten Kurvensegments (104) verbunden ist, oder wobei der Endpunkt des kreisförmigen Segments (105) mit dem Endpunkt des zweiten Kurvensegments (104) verbunden ist.

6. Wellenleiterkern (100) nach einem der vorhergehenden Ansprüche, wobei der Wellenleiterkern (100) eine erste glatte Kurve (101a) als eine Innenkante und/oder Mittellinie des Wellenleiterkerns (100) und eine zweite glatte Kurve (101b) als eine Außenkante des Wellenleiterkerns (100) aufweist.

7. Wellenleiterkern (100) nach Anspruch 6, wobei die erste glatte Kurve (101a) und die zweite glatte Kurve (101b) parallel zueinander sind.

8. Wellenleiterkern (100) nach Anspruch 6,
wobei die erste glatte Kurve (101a) und die zweite glatte Kurve (101b) nicht parallel zueinander sind.

9. Wellenleiterkern (100) nach einem der Ansprüche 6 bis 8,
wobei der Wellenleiterkern (100) konfiguriert ist, um mit einem thermooptischen Phasenschieber (200) in mindestens einem Abschnitt der inneren Begrenzung des Wellenleiterkerns (100) thermisch verbindbar zu sein.

10. Wellenleiterkern (100) nach Anspruch 9,
wobei eine Seitenwand des Wellenleiterkerns (100), die dem thermooptischen Phasenschieber (200) zugewandt ist, in dem mindestens einen Abschnitt der inneren Begrenzung konfiguriert ist, um für den thermooptischen Phasenschieber (200) offen zu sein.

11. Wellenleiterkern (100) nach einem der Ansprüche 6 bis 10,
wobei eine Mittellinie des Wellenleiterkerns (100) entlang der Längsausdehnung des Wellenleiterkerns (100) eine Ebene definiert, und wobei die Innenkante des Wellenleiterkerns (100) und die Außenkante des Wellenleiterkerns (100) in der Ebene entlang der Längsausdehnung des Wellenleiterkerns (100) liegen.

12. Wellenleiterkern (100) nach einem der vorhergehenden Ansprüche, wobei der Wellenleiterkern (100) konfiguriert ist, um einen Flüstergaleriemodus anzuregen.

**Revendications**

1. Cœur de guide d'ondes (100) ayant une courbe lisse (101) comme bord et/ou axe central du cœur de guide d'ondes (100),

dans lequel une courbure de la courbe lisse (101) est continue et la dérivée première de la courbure de la courbe lisse (101) par rapport à une longueur d'arc de la courbe lisse (101) est continue ;
dans lequel la courbe lisse (101) comprend un point de début de courbe (102) et un point de fin de courbe (103) ;
dans lequel la dérivée de la courbure de la courbe lisse (101) est nulle au point de début de courbe (102) et au point de fin de courbe (103) ;
dans lequel la courbure de la courbe lisse (101) est nulle au point de début de courbe (102), et est non nulle ou nulle au point de fin de courbe (103) ; dans lequel la courbe lisse (101) comprend un segment de courbe (104) et un segment circulaire (105) ;
dans lequel le segment de courbe (104) comprend un point de début du segment de courbe (104) et un point de fin du segment de courbe (104) ; dans lequel la dérivée de la courbure de la courbe lisse (101) est nulle au point de début du segment de courbe (104) et est nulle au point de fin du segment de courbe (104) ;

dans lequel la courbure de la courbe lisse (101) est nulle au point de début du segment de courbe (104) et est non nulle au point de fin du segment de courbe (104) ;

dans lequel une courbure du segment circulaire (105) est constante ;

dans lequel la courbure du segment circulaire (105) est égale à la courbure de la courbe lisse (101) au point de fin du segment de courbe (104) ;

dans lequel le segment circulaire (105) comprend un point de début du segment circulaire (105) et un point de fin du segment circulaire (105) ; et dans lequel le point de fin du segment de courbe (104) est relié au point de début du segment circulaire (105).

2. Cœur de guide d'ondes (100) selon la revendication 1,

dans lequel un système de coordonnées cartésiennes est défini avec le point de début du segment de courbe (104) comme origine ;

dans lequel l'axe x et l'axe y sont définis de manière à ce que le point de fin du segment de courbe (104) se trouve dans le premier quadrant, et à avoir un angle tangentiel de zéro radian au point de début du segment de courbe (104) ;

dans lequel l'angle tangentiel de n'importe quel point P sur le segment de courbe (104) est

$$\theta(s) = \frac{4\kappa_e^3 \theta_e s^3 - \kappa_e^4 s^4}{16\theta_e^3};$$

où s est la longueur de la longueur d'arc de la courbe lisse (101) depuis le point de début du segment de courbe (104) jusqu'à un point P,

où $\kappa_e$ est la courbure au point de fin du segment de courbe (104), et $\theta_e$ est l'angle tangentiel au point de fin du segment de courbe (104).

3. Cœur de guide d'ondes (100) selon la revendication 1, dans lequel le segment de courbe (104) de la courbe lisse (101) est parallèle à une courbe de référence ;

dans lequel la courbe de référence comprend un point de début de la courbe de référence et un point de fin de la courbe de référence ;

dans lequel un système de coordonnées cartésiennes est défini avec le point de début de la courbe de référence comme origine ;

dans lequel l'axe x et l'axe y sont définis de manière à ce que le point de fin de la courbe de référence se trouve dans le premier quadrant, et à avoir un angle tangentiel de zéro radian au point de début de la courbe de référence ; dans lequel l'angle tangentiel de n'importe quel point P sur la courbe de référence est

$$\theta(s) = \frac{4\kappa_e^3 \theta_e s^3 - \kappa_e^4 s^4}{16\theta_e^3};$$

où s est la longueur de la longueur d'arc de la courbe lisse (101) depuis le point de début de la courbe de référence jusqu'à un point P,

où $\kappa_e$ est la courbure au point de fin de la courbe de référence, et $\theta_e$ est l'angle tangentiel au point de fin de la courbe de référence.

4. Cœur de guide d'ondes (100) selon une des revendications 1 à 3, dans lequel la courbe lisse (101) comprend en outre un segment rectiligne (107), le segment rectiligne (107) comprenant un point de début du segment rectiligne (107) et un point de fin du segment rectiligne (107) ;

dans lequel le point de fin du segment rectiligne (107) est relié au point de début du segment de courbe (104).

5. Cœur de guide d'ondes (100) selon une des revendications 1 à 4, dans lequel le segment de courbe (104) est un premier segment de courbe (104) et dans lequel la courbe lisse (101) comprend en outre un deuxième segment de courbe (106) en fonction du premier segment de courbe (104),

dans lequel la courbure au point de fin du premier segment de courbe (104) est égale à la courbure au point de fin du deuxième segment de courbe (104) ; et

dans lequel le point de fin du premier segment de courbe (104) est relié au point de fin du deuxième segment de courbe (104), ou dans lequel le point de fin du segment circulaire (105) est relié au point de fin du deuxième segment de courbe (104).

6. Cœur de guide d'ondes (100) selon l'une quelconque des revendications précédentes, le cœur de guide d'ondes (100) ayant une première courbe lisse (101a) comme bord intérieur et/ou axe central du cœur de guide d'ondes (100), et ayant une deuxième courbe lisse (101b) comme bord extérieur du cœur de guide d'ondes (100).

7. Cœur de guide d'ondes (100) selon la revendication 6, dans lequel la première courbe lisse (101a) et la deuxième courbe lisse (101b) sont parallèles l'une à l'autre.

8. Cœur de guide d'ondes (100) selon la revendication 6,
dans lequel la première courbe lisse (101a) et la deuxième courbe lisse (101b) ne sont pas parallèles l'une à l'autre.

9. Cœur de guide d'ondes (100) selon une des revendications 6 à 8,
le cœur de guide d'ondes (100) étant conçu pour pouvoir être relié thermiquement à un déphaseur thermooptique (200) dans au moins une partie de la limite intérieure du cœur de guide d'ondes (100).

10. Cœur de guide d'ondes (100) selon la revendication 9,
une paroi latérale du cœur de guide d'ondes (100) tournée vers le déphaseur thermooptique (200) dans l'au moins une partie de la limite intérieure étant conçue pour être ouverte pour le déphaseur thermooptique (200).

11. Cœur de guide d'ondes (100) selon une des revendications 6 à 10, un axe central du cœur de guide d'ondes (100) le long de l'extension longitudinale du cœur de guide d'ondes (100) définissant un plan, et
le bord intérieur du cœur de guide d'ondes (100) et le bord extérieur du cœur de guide d'ondes (100) se trouvant dans ledit plan le long de l'extension longitudinale du cœur de guide d'ondes (100).

12. Cœur de guide d'ondes (100) selon l'une quelconque des revendications précédentes,
le cœur de guide d'ondes (100) étant conçu pour exciter un mode galerie des chuchotements.

**FIG. 1**

FIG. 2

**FIG. 3**

FIG. 4

| | | Tuning power for 1FSR (mW) | Heater efficiency (nm/mW) | Heater efficiency (GHz/mW) |
|---|---|---|---|---|
| W-heaters (experimental) | No UCUT | 56.6 | 0.228 | 40 |
| | With UCUT | 14.1 | 0.912 | 160 |
| Doped Si heaters (simulated) | No UCUT | 25.4 | 0.827 | 144 |
| | With UCUT | 9.9 | 2.1 | 367 |

**FIG. 5**

**EP 4 386 456 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004208465 A1
- US 5524165 A
- US 2021294032 A1